# NEUE EUROPÄISCHE PATENTSCHRIFT

(11) **EP 1 077 343 B2**
(45) Veröffentlichungstag und Bekanntmachung des Hinweises auf die Entscheidung über den Einspruch: **22.06.2011**
(45) Hinweis auf die Patenterteilung: 28.06.2006
(21) Anmeldenummer: 00112622.6
(22) Anmeldetag: 14.06.2000
(51) Int. Cl.: F16L 33/207, F16L 33/16

(54) **Vorrichtung zum Herstellen einer Verbindung zwischen einem Leitungsschlauch und einem weiteren Element**
Device for connecting a hose to another coupling element
Dispositif pour l'accouplement d'un tuyau souple avec un raccord

(30) Priorität: 14.08.1999 DE 19938677
(43) Veröffentlichungstag der Anmeldung: 21.02.2001
(73) Patentinhaber: Franz Schuck GmbH, 89555 Steinheim (DE)
(72) Erfinder: Schuck, Franz, 89518 Heidenheim (DE)
(74) Vertreter: Dr. Weitzel & Partner

(56) Entgegenhaltungen:
- EP-A1- 0 072 199
- WO-A1-00/25055
- WO-A1-00/39495
- CH-A- 459 687
- DE-A1- 19 938 677
- DE-U- 7 231 692
- DE-U1- 29 811 506
- US-A- 2 093 092
- US-A- 2 093 092
- US-A- 3 574 360
- US-A- 3 574 360
- US-A- 4 887 846

## Beschreibung

Die Erfindung betrifft eine Vorrichtung zum Herstellen einer leitenden Verbindung zwischen einem Leitungsschlauch und einem weiteren Element.

Die Erfindung ist insbesondere anwendbar für alle medienführenden Leitungen, z. B. für Gasnetze.

In neuerer Zeit geht man dazu über, veraltete Gasnetze dadurch zu sanieren, daß man Leitungsschläuche in die noch existierenden, aber nicht mehr zuverlässigen Gasrohre einzieht. Die Leitungsschläuche sind es somit, die das Gas leiten, während die alte Gasleitung lediglich als Umhüllung und Stütze des Leitungsschlauches dient.

Neuralgische Stellen solcher Leitungsnetze mit Leitungsschläuchen sind sodann Anschlußstellen, an welchen der Leitungsschlauch an irgendein anderes Element angeschlossen werden muß, beispielsweise an ein Ventil, eine Verzweigung oder an ein Endstück. An oberster Stelle von allen Anforderungen steht bei solchen Gasnetzen das Erfordernis der Sicherheit. Dieses Erfordernis erstreckt sich auf sämtliche Betriebszustände. Hierzu gehört der Normalbetrieb, bei welchem Gas in der Leitung strömt und in ein Gebäude eingeführt wird, wie auch der Abschaltbetrieb, bei welchem kein Gas entnommen wird, weil in dem betreffenden Gebäude kein Verbraucher eingeschaltet ist, oder jener Zustand, bei welchem der Gasstrom zum Zwecke von Reparaturarbeiten abgesperrt ist.

DE 28 42 227 C2 beschreibt eine Vorrichtung zum Herstellen einer Verbindung zwischen zwei einander zugewandten Rohrenden. Die Rohrenden sind Bestandteile von Leitungen aus Werkstoffen wie Stahl oder Kunststoff, somit nicht von Schläuchen, wie im vorliegenden Falle. Diese bekannte Vorrichtung weist eine Muffe auf, die auf die beiden Rohrenden aufgeschoben wird. Die Muffe ist mit ringförmigen Ausbuchtungen versehen. Jede Ausbuchtung nimmt dabei einen O-Ring auf, der eine Abdichtung gegen das betreffende Rohrende herbeiführt.

DE 7 231 692 U beschreibt eine Vorrichtung mit den Merkmalen des Oberbegriffs des Anspruchs 1.

Der Erfindung liegt die Aufgabe zugrunde, eine Vorrichtung zum Herstellen einer leitenden Verbindung zwischen einem Leitungsschlauch und einem anderen Element derart zu gestalten, daß eine dauerhafte und zuverlässige Dichtheit gewährleistet ist, und zwar bei geringstmöglichem baulichem Aufwand.

Diese Aufgabe wird durch die Merkmale von Anspruch 1 gelöst.

Die Erfindung ist anhand der Zeichnungen näher erläutert. Darin ist im einzelnen folgendes dargestellt:
- Figur 1: zeigt eine erste Ausführungsform eines Anschlußelementes in einem Axialschnitt, und zwar in einer Vorbereitungsphase.
- Figur 2: zeigt den Gegenstand von Figur 1 nach Herstellen einer gasdichten Verbindung der beteiligten Bauteile.
- Figur 3: zeigt eine Ausführungsform nicht gemäß der Erfindung, dargestellt in einer Vorbereitungsphase.
- Figur 4: zeigt den Gegenstand von Figur 3 nach Herstellen einer gasdichten Verbindung.

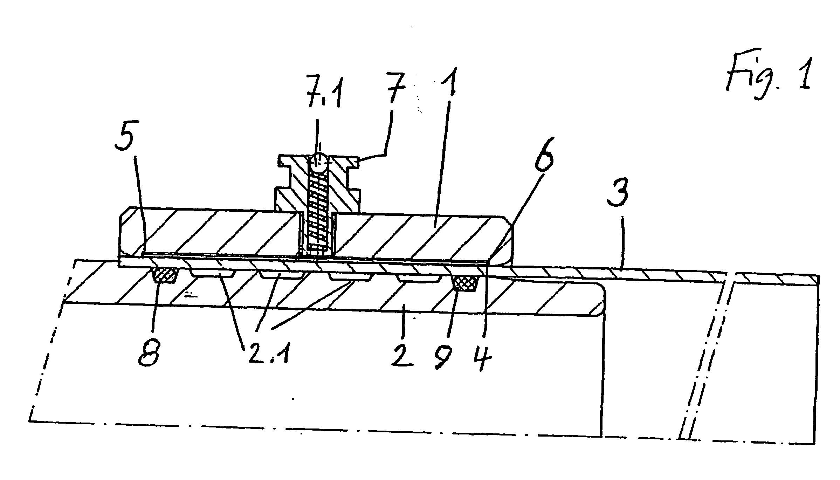

In Figur 1 erkennt man ein erfindungsgemäßes Anschlußelement. Dieses umfaßt eine ringförmige Außenmuffe 1 sowie eine Innenmuffe 2. Zwischen diesen beiden befindet sich der Endbereich eines Leitungsschlauches 3. Der Endbereich des Leitungsschlauches 3 ist somit zwischen den beiden Muffen sandwichartig eingebettet.

Die Außenmuffe 1 umschließt eine Spannhülse 4. Die Spannhülse 4 ist in axialer Richtung etwa gleich lang, wie die Außenmuffe 1. Sie ist an ihren Enden durch Schweißnähte 5 und 6 mit der Außenmuffe 1 dicht verbunden. Die Dichtheit muß wenigstens einem unter Druck stehenden Medium standhalten. Im vorliegenden Falle liegt die Spannhülse 4 an der Außenmuffe 1 berührend an, sodaß ein Spalt von der Weite Null zwischen diesen beiden vorliegt. Der Spalt könnte jedoch auch eine endliche Weite haben.

Mit der Außenmuffe 1 ist ein Einpresskopf 7 fest verbunden. Dieser umfaßt ein Rückschlagventil 7.1.

Die Innenmuffe 2 ist mit umlaufenden Ringnuten 2.1 versehen. Statt der Ringnuten könnten auch andere Aussparungen in die äußere Mantelfläche der Innenmuffe 2 eingearbeitet sein, beispielsweise Sackbohrungen.

Der Einpresskopf ist an ein Druckmedium anschließbar.

Man erkennt weiterhin O-Ringe 8, 9. Diese sind in entsprechende Umfangsnuten der Innenmuffe 2 eingelegt. O-Ringe sind aber nicht zwingend notwendig.

Die Innenmuffe 2 kann Bestandteil einer Armatur sein, beispielsweise eines Kugelschiebers oder einer Rohrverzweigung. Sie kann der Endbereich einer Rohrleitung sein. Sie kann auch eine Verbindung von zwei Schläuchen dienen.

Die dargestellten Bauteile - außer dem Leitungsschlauch - können aus jeglichem Material bestehen, insbesondere aus Stahl, Messing oder Kunststoff. Der Leitungsschlauch 3 ist im allgemeinen ein mediumdichter Gewebeschlauch. Er könnte auch aus Gummi bestehen.

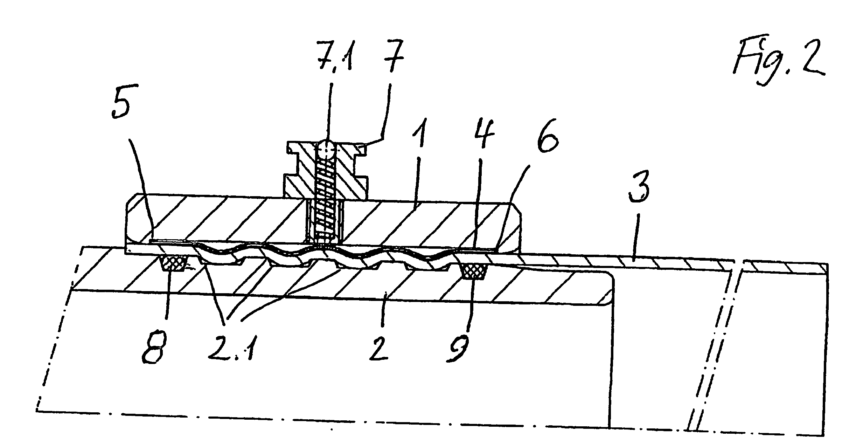

Figur 2 stellt den Gegenstand von Figur 1 dar, jedoch nach Einleiten eines Mediums durch den Einpresskopf in den Spalt zwischen Muffe 1 und Spannhülse 4. Wie man sieht, ist die Spannhülse durch den Druck des Mediums wellenartig verformt. Gleichzeitig mit ihr ist der Endbereich des Leitungsschlauches 3 entsprechend verformt, und zwar derart, daß das Material des Leitungsschlauches 3 in die Umfangsnuten 2.1 eingepresst ist. An den Kanten der Umfangsnuten 2.1 findet eine gewisse Verkrallung statt. Diese hat eine Doppelfunktion: zum einen wird hierdurch verhindert, daß die Schlauchleitung 3 aus der Einspannung zwischen den beiden Muffen 1, 2 herausgezogen wird, falls aus irgendwelchen Gründen ein Zug in axialer Richtung auftritt. Zum anderen trägt die Verkrallung zur Steigerung der Dichtheit bei und verhindert damit das Austreten von Gas (oder einem sonstigen Medium), das in der Schlauchleitung 3 geführt wird.

Das Druckmedium, das durch den Einpresskopf in den Spalt zwischen Außenmuffe 1 und Spannhülse 4 eingeleitet wird, kann eine Flüssigkeit oder eine Paste sein. Wie man sieht, füllt es Taschen 10 aus, die es durch Verformen der Spannhülse 4 selbst gebildet hat.

Handelt es sich um eine normale Flüssigkeit oder Paste, so ist das Rückschlagventil 7.1 notwendig, um ein ungewolltes Austreten des Druckmediums zu verhindern. Es ist aber auch denkbar, als Druckmedium ein selbstaushärtendes Material zu verwenden, beispielsweise ein ZweiKomponenten-Harz. Führt man ein solches Medium in den Einpresskopf 7 ein und hält den Druck eine geringe Zeitspanne aufrecht, so härtet das Druckmedium aus und hält die Spannbuchse 4 somit dauernd unter Spannung. Man kann somit auf ein Rückschlagventil verzichten.

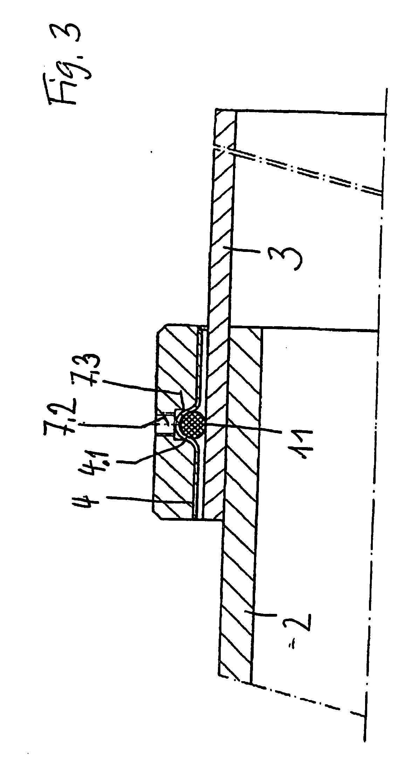

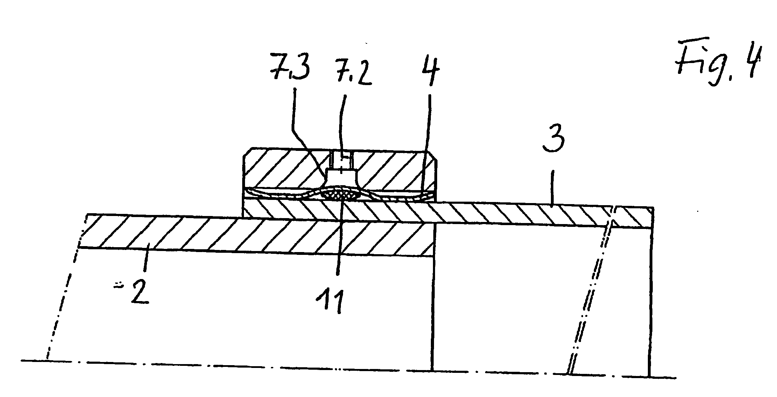

Bei der Ausführungsform gemäß der Figuren 3 und 4 erkennt man wieder die äußere Muffe 1, die innere Muffe 2, die Schlauchleitung 3 sowie die Spannhülse 4.

Der Einpresskopf 7 ist nicht dargestellt, wohl aber eine Anschlußbohrung 7.2. Diese weist eine Erweiterung 7.3 auf. Die Erweiterung ist derart bemessen, daß sie eine Ringwulst 4.1 der Klemmhülse 4 aufzunehmen vermag. Die Ringwulst umschlingt einen O-Ring 11.

In Figur 4 ist jener Zustand dargestellt, der eingetreten ist, nachdem ein Druckmedium in die Bohrung 7.2 eingelassen wurde. Man erkennt, daß das Klemmblech 4 entsprechend ausgebeult ist. Es haben sich Taschen gebildet, die vom Druckmedium ausgefüllt sind. Der O-Ring 11 ist zusammengequetscht und übt - zusätzlich zu dem Spannblech 4 - eine Dicht- und Klemmwirkung aus. Im übrigen gilt bezüglich des Druckmediums und gegebenenfalls eines Rückschlagventils dasjenige, was bezüglich der Figuren 1 und 2 oben ausgeführt wurde. Benutzt man ein selbstaushärtendes Material als Druckmedium, beispielsweise ein ZweiKomponenten-Harz, so kann das Rückschlagventil entfallen.

Die radialen Abmessungen der Muffen 1 und 2 sowie der Klemmhülse 4 in Bezug auf die Schlauchleitung 3 sind derart gewählt, daß diese Teile im drucklosen Zustand leicht aufeinander aufschiebbar sind. Die Erfindung hat daher auch den Vorteil, daß sie bei unrunder Innenmuffe 2 anwendbar ist.

## Patentansprüche

1. Vorrichtung zum Herstellen einer Verbindung zwischen einem Leitungsschlauch (3) und einem anderen Element;
mit einer ringförmigen Außenmuffe (1);
mit einer ringförmigen Innenmuffe (2);
Außenmuffe (1) und Innenmuffe (2) sind dazu vorgesehen, den Leitungsschlauch sandwichartig zwischen sich einzuschließen;
zwischen Außenmuffe (1) und Leitungsschlauch (3) ist eine Spannhülse (4) aus Stahl oder Messing vorgesehen;
die Spannhülse (4) ist an zwei axial aufeinanderfolgenden Stellen mit der Außenmuffe unter Belassen eines ringförmigen Spaltraumes zwischen Außenmuffe (1) und Spannhülse (4) durch Schweißen dicht verbunden;
an den Spaltraum ist ein Druckstutzen (7) zum Einlassen eines unter Druck stehenden, fließfähigen Mediums angeschlossen;
die Mantelfläche der Innenmuffe (2) weist Aussparungen (2.1) auf;
die Aussparungen haben die Gestalt von Umfangsnuten;
**dadurch gekennzeichnet, dass**
die Spannhülse (4) aus einem ausbeulbaren Blech besteht,

2. Vorrichtung nach einem der Ansprüche 1, **dadurch gekennzeichnet, dass** der Druckstutzen (7) ein Rückschlagventil (7.1) aufweist.

3. Vorrichtung nach einem der Ansprüche 1 oder 2, **dadurch gekennzeichnet, dass** die Mantelfläche der Innenmuffe (2) in Bereichen, die den axialen Enden der Außenmuffe (1) gegenüberliegen, je eine Nut mit darin eingelassenem O-Ring (8, 9) aufweist.

4. Vorrichtung nach einem der Ansprüche 1 bis 3, **dadurch gekennzeichnet, dass** die Spannhülse (4) wenigstens einen O-Ring (11) umschließt.

5. Vorrichtung nach Anspruch 4, **dadurch gekennzeichnet, dass** im Bereich des Einlasskanals (7.2) in der Außenmuffe (1) eine Ringnut (7.3) zur Aufnahme einer Ringwulst (4.1) der Spannhülse (4) vorgesehen ist, und dass die Ringwulst (4.1) den O-Ring (11) umschließt.

6. Vorrichtung nach einem der Ansprüche 3 bis 5, **dadurch gekennzeichnet, dass** die Ringnut (7.3) in axialer Richtung neben dem Druckstutzen (7) zum Einlassen eines unter Druck stehenden, fließfähigen Mediums angeordnet ist.

7. Vorrichtung nach einem der Ansprüche 3 bis 6, **dadurch gekennzeichnet, dass** diese frei von O-Ringen ist.

## Claims

1. An apparatus for producing a connection between a hose (3) and another element;
with an annular outside coupling (1);
with an annular inside coupling (2);
outside coupling (1) and inside coupling (2) are provided to enclose the hose in a sandwich-like manner between themselves;
a clamping sleeve (4) made of steel or brass is provided between outside coupling (1) and hose (3);
the clamping sleeve (4) is connected by welding in a leakproof manner at two axially successive points with the outside coupling by leaving an annular gap space between outside coupling (1) and clamping sleeve (4);
a pressure socket (7) is connected to the annular space for inserting a pressurized flowing medium;
the jacket surface of the inside coupling (2) comprises recesses (2.1); the recesses have the shape of circumferential grooves;
**characterized in that** the clamping sleeve (4) consists of a bulging sheet metal.

2. An apparatus according to one of the claims 1, **characterized in that** the pressure socket (7) comprises a non-return valve (7.1).

3. An apparatus according to one of the claims 1 or 2, **characterized in that** the jacket surface of the inside coupling (2) comprises a groove each with an 0-ring (8, 9) inserted therein in the regions which are opposite of the axial ends of the outside coupling (1).

4. An apparatus according to one of the claims 1 to 3, **characterized in that** the clamping sleeve (4) encloses at least one O-ring (11).

5. An apparatus according to claim 4, **characterized in that** an annular groove (7.3) for receiving an annular bead (4.1) of the clamping sleeve (4) is provided in the region of the inlet channel (7.2) in the outside coupling (1), and that the annular bead (4.1) encloses the O-ring (11).

6. An apparatus according to one of the claims 3 to 5, **characterized in that** the annular groove (7.3) is arranged in the axial direction adjacent to the pressure socket (7) for allowing the inlet of a pressurized flowing medium.

7. An apparatus according to one of the claims 3 to 6, **characterized in that** the same is free of O-rings.

## Revendications

1. Dispositif pour la création d'une liaison entre une gaine de ligne (3) et un autre élément ;
avec un manchon extérieur (1) annulaire ;
avec un manchon intérieur (2) annulaire ;
le manchon extérieur (1) et le manchon intérieur (2) sont destinés à enfermer la gaine de ligne entre eux à la façon d'un sandwich ;
il est prévu entre le manchon extérieur (1) et la gaine de ligne (3) une douille de serrage (4) en acier ou laiton ;
la douille de serrage (4) est reliée de façon étanche au manchon extérieur par soudage, en deux endroits se suivant dans le sens axial, en ménageant un interstice annulaire entre le manchon extérieur (1) et la douille de serrage (4) ;
un raccord de pression (7) est raccordé à l'interstice pour amener un fluide sous pression ;
la surface d'enveloppe du manchon intérieur (2) présente des évidements (2.1) ;
les évidements ont la forme de gorges circonférentielles ;
**caractérisé en ce que** la douille de serrage (4) se compose d'une tôle pouvant être débosselée.

2. Dispositif selon l'une quelconque des revendications 1, **caractérisé en ce que** le raccord de pression (7) possède un clapet anti-retour (7.1).

3. Dispositif selon l'une quelconque des revendications 1 ou 2, **caractérisé en ce que** la surface d'enveloppe du manchon intérieur (2) présente une gorge dans laquelle est inséré un joint torique (8, 9) dans chaque zone faisant face aux extrémités axiales du manchon extérieur (1).

4. Dispositif selon l'une quelconque des revendications 1 à 3, **caractérisé en ce que** la douille de serrage (4) entoure au moins un joint torique (11).

5. Dispositif selon la revendication 4, **caractérisé en ce qu'**il est prévu au niveau du canal d'entrée (7.2) dans le manchon extérieur (1) une gorge annulaire (7.3) destinée à recevoir un bourrelet annulaire (4.1) de la douille de serrage (4) et **en ce que** le bourrelet annulaire (4.1) entoure le joint torique (11).

6. Dispositif selon l'une quelconque des revendications 3 à 5, **caractérisé en ce que** la gorge annulaire (7.3) est disposée dans le sens axial à côté du raccord de pression (7) destiné à amener un fluide sous pression.

7. Dispositif selon l'une quelconque des revendications 3 à 6, **caractérisé en ce qu'**il ne comporte pas de joints toriques.
